# EUROPÄISCHE PATENTSCHRIFT

(11) **EP 2 337 311 B1**
(45) Veröffentlichungstag und Bekanntmachung des Hinweises auf die Patenterteilung: **02.09.2015**
(21) Anmeldenummer: 09180063.1
(22) Anmeldetag: 21.12.2009
(51) Int. Cl.: H04L 29/08, H04L 29/06, E05B 49/00, G06K 19/00, G07C 9/00, B60R 25/00

(54) **Verfahren und Vorrichtung zur Integration von Mobilfunktechnologien in einem Schlüssel und schlüsselähnlichen Objekten**
Method and device for integrating mobile radio technologies in a key and key-like objects
Procédé et dispositif d'intégration de technologies de radio mobile dans une clé et objets ressemblant à une clé

(43) Veröffentlichungstag der Anmeldung: 22.06.2011
(73) Patentinhaber: Deutsche Telekom AG, 53113 Bonn (DE)
(72) Erfinder: Dr. Marcus Heitmann, Heitmann, 53175, Bonn (DE)
(74) Vertreter: 2K Patentanwälte Blasberg Kewitz & Reichel

(56) Entgegenhaltungen:
- EP-A1- 1 191 486
- EP-A1- 1 420 525
- EP-A2- 0 913 979
- WO-A1-00/38119
- WO-A2-2007/128319
- DE-A1-102006 015 212
- DE-A1-102006 052 769
- US-A1- 2008 150 683
- N B: 'SIM ACCESS PROFILE, Interoperability Specification V11r00' 18 Dezember 2008, XP055118185

## Beschreibung

Die Erfindung betrifft ein Verfahren und eine Vorrichtung zur Bereitstellung von SIM-Card-Informationen, insbesondere zur Bereitstellung von SIM-Card-Informationen für ein Objekt, das durch einen Schlüssel zu öffnen ist. Als ein solches Objekt kann ein Fahrzeug betrachtet werden.

### Stand der Technik

Im Folgenden wird von einem Fahrzeug gesprochen. Die Erfindung ist jedoch nicht hierauf beschränkt. Es kann sich auch um Häuser, Wohnungen, Hotelzimmer, Schiffe, Flugzeuge, Motorräder etc. handeln, die alle mit einem Schlüssel oder einem ähnlichen Gegenstand (wie eine Karte) geöffnet, gestartet oder gestoppt werden. Der Begriff Fahrzeug wird folglich nur als exemplarisches Beispiel verwendet, der jedoch durch die anderen Einsatzgebiete ersetzt werden kann.

Internet und Onlinedienste in Fahrzeugen setzen eine Daten-und/oder eine Sprachverbindung voraus, die im Regelfall über Mobilfunktechnologien hergestellt wird (meist GSM-, GPRS-, EDGE- oder UMTS-Modems). Die technischen Voraussetzungen zur Etablierung eines Zugangs zu Internet und Onlinediensten können entweder fest im Fahrzeug verbaut oder vom Kunden ins Fahrzeug mitgebracht werden.

Die SIM-Karte (Subscriber Identity Module) ist eine Chipkarte, die in ein Mobiltelefon eingesteckt wird und zur Identifikation des Nutzers im Netz dient. Mit ihr stellen Mobilfunkanbieter Teilnehmern mobile Telefonanschlüsse und Datenanschlüsse zur Verfügung. Die Definition der SIM-Karte ist nicht nur auf GSM-Netze beschränkt. Die SIM-Karte muss nicht Hardware, sondern kann ebenfalls Software sein.

Der Festverbau eines Modems im Fahrzeug bietet dabei klare Komfort- und Technik-Vorteile:
a) kann die Technik besser in die Fahrzeugbedienelemente (Touchscreen, Dreh-Drück-Steller, Lenkradtasten u.v.m.) integriert werden und
b)ist die Signalqualität und damit die Datenübertragungsrate durch angeschlossene externe Antennen wesentlich höher.

Beim Festverbau eines Modems mit integrierter SIM-Karte kann der Automobilhersteller (im Folgenden OEM genannt) entweder selbst als Mobile Network Operator (im Folgenden Provider genannt) vor dem Kunden auftreten oder dies Dritten überlassen. Aus Gründen der Praktikabilität tritt häufig der OEM als Provider auf. Dabei erwirbt der OEM Datenkontingente und rechnet diese je nach Verbrauch mit dem Provider ab. Es können in der Regel "poolfähige" SIM-Karten genutzt werden, bei denen der Verbrauch nicht einzeln abgerechnet wird sondern über die Summe aller SIM-Karten geteilt durch die Anzahl der SIM-Karten der durchschnittliche Verbrauch errechnet wird. Das Risiko, dass das vereinbarte Datenkontingent nicht überschritten wird trägt der OEM. Die Nutzung von Internet und Onlinediensten in Fahrzeugen wird **dadurch gehemmt, dass** der OEM in diesem Modell das finanzielle Risiko trägt, da er nicht wissen kann, in welchem Ausmaß Autofahrer die Dienste nutzen werden. Ein SIM-Karten-Slot im Innenraum des Fahrzeugs birgt das Risiko, dass die SIM-Karte entwendet wird.

Eine zweite Option, die die Nutzung von Internet und Onlinediensten in Fahrzeugen ermöglicht, besteht darin, dass der Zugang zu diesen Diensten über die SIM-Karte des Nutzers realisiert wird. In der Praxis wird dazu häufig eine Bluetooth-Verbindung zwischen dem Endgerät des Nutzers (i.d.R. ein Mobiltelefon) und einem Network Access Device (Netzwerkzugangsgerät) aufgebaut. Letzteres verwendet die Einwahl-/Anmeldedaten aus dem Mobiltelefon respektive der SIM-Karte für den Zugang/Zugriff auf das Internet. Nachteilig ist an dieser Lösung die große Vielfalt an möglichen Endgeräten/Mobiltelefonen und die daraus potenziell entstehenden Inkompatibilitäten. Eine Standard für diesen Ansatz ist Remote-SIM-Access. Das SIM-Access-Profil (SAP, auch rSAP) ist ein Bluetooth-Datenübertragungsprotokoll, das vor allem in Mobiltelefonen genutzt wird. Damit ist es möglich, dass eine in einem Kraftfahrzeug eingebaute Mobilfunkeinheit (Autotelefon) mittels Bluetooth eine Verbindung mit der SIM-Karte eines Bluetooth-fähigen Mobiltelefons herstellt. Das Mobiltelefon befindet sich dann im so genannten Standby-Modus, der den Akku des Mobiltelefons nur minimal belastet. Ab diesem Zeitpunkt werden die auf der SIM-Karte vorhandenen Zugangsdaten (quasi der Telefonanschluss) vom Autotelefon mit eigener GSM-Sende- und Empfangseinheit genutzt. Telefonate und Mitteilungen werden über die Fahrzeugantenne des Autotelefons geleitet. Jedoch setzt auch dieser Ansatz eine Bluetooth-Kompatibilität zwischen Telefon und Fahrzeug voraus.

Ebenso ist es möglich, dass Mobiltelefon als Modem zu nutzen, d.h. dass die Internetanbindung direkt über das Endgerät des Nutzers aufgebaut wird und die Datenübertragung zum Fahrzeug über eine kabelgebundene oder kabellose (WLAN, Bluetooth etc.) Verbindung stattfindet. Dies gestaltet sich jedoch in der Praxis als Nachteil, da die Realisierung einer externen Antennenanbindung schwierig zu realisieren ist. Ohne eine externe Antennenanbindung sind bei höheren Geschwindigkeiten i.d.R. nur geringe Datenraten erreichbar.

Die Nutzung eines Schlüssels zu anderen Zwecken als zum Öffnen, Verschließen oder Starten eines Objektes wie z.B. eines Fahrzeugs wird bereits praktiziert. Dazu gehören Verfahren zur Speicherung von Daten des Fahrzeugs (u.a. Fahrgestellnummer oder Kilometerstand) in dem Fahrzeugschlüssel zum Beispiel zur Auswertung dieser Daten in einer Werkstatt ohne dass ein Zugang/Zugriff auf das Fahrzeug nötig wäre.

Darüber hinaus existieren Verfahren und Vorrichtungen zur Einstellung benutzerabhängiger Parameterwerte - beispielsweise über Mobiltelefone oder SIM-Karten - wie in DE 103 50 715 A1 beschrieben. Damit lassen sich nutzerbezogene Einstellung wie Sitzposition, Spiegel- oder Radioeinstellungen auf einem mobilen Gerät hinterlegen.

Es existieren bereits angemeldete Verfahren, die die Nutzung von Mobiltelefonen als Mittel zur Authentifizierung am Fahrzeug (als Fahrzeugschlüssel) beschreiben. Dazu werden softwaretechnische und/oder hardwaretechnische (bspw. RFID-Technologie) Elemente in das Mobiltelefon eingebracht, die der Funktionalität eines Fahrzeugschlüssels (öffnen, schließen, starten, Fernbedienung von Funktionen) entsprechen.

Stand der Technik ist auch die Realisierung der Nutzung von sprachgebundenen Diensten (Telefonie) über kabelgebundene oder kabellose Technologien, mit einer Integration in Fahrzeugbestandteile wie verbaute Mikrofone, Lautsprecher, Lenkradbedienelemente und Radio/CD/Navigationsgeräte.

Die Druckschrift US2008/0150683 offenbart ein Verfahren, bei dem ein mobiles Endgerät (mobiles Telefon), als Schlüssel für ein Fahrzeug eingesetzt werden soll. Neben ainer SIM Karte, die jedoch keinerlei weitere Funktion übernimmt, als das einloggen in eine Netzwerk, und deren Daten nicht an das Auto übertragen werden, umfasst das mobile Telefon einem weiteren Chip, der Identifikationsdaten verwaltet, die an das Auto überragen werden, um bestimmte Funktion zu aktivieren.

Die DE102006 015 212 A1 offenbart vielmehr, dass das Fahrzeug einen Leseplatz für eine SIM Karte aufweist. Genau dies ist jedoch der gegenteilige Ansatz der vorliegenden Erfindung.

Aus der DE10 2006052769 A1 ist ebenfalls lediglich bekannt, dass eine SIM Karte in einem Mobiltelefon vorhanden ist und dass deren Algorithmus zu komplex ist für eine Nutzungsfreigabe eines Fahrzeuges.

Die WO 00/38119 offenbart das Übertragen von SIM-Karten zur Identifizierung einer Person. Diese Daten können als eine Art Visitenkarte verwendet werden. Eine Übergabe der Daten zur Aktivierung eines Netzes insbesondere durch einen Schlüssel, der ein Objekt öffnet ist nicht offenbart.

"SIM ACCESS PROFILE Interoperability Specification V11r00" beschreiben den enstprechenden Standard.

### Überblick über die Erfindung:

Aufgabe der Erfindung ist die Integration/Bereitstellung von Technologien aus dem Mobilfunk, insbesondere SIM-Informationen, für ein Objekt, das durch einen Schlüssel geöffnet werden kann, und wobei das geöffnete Objekt bzw. Komponenten dieses Objektes oder der Schlüssel selbst eine Funkverbindung erlauben.

Gelöst wird diese Aufgabe durch ein Verfahren und eine Vorrichtung nach den unabhängigen Ansprüchen.

Es handelt sich hierbei um ein Verfahren zur Bereitstellung von SIM-Card-Informationen für ein durch ein Schlüssel betretbares Objekt, das Mittel aufweist, um sich in ein Datennetzwerk und/oder Informationsnetzwerk einzuwählen.

Beim physikalischen öffnen des Objektes durch den Schlüssel werden die SIM-Card-Informationen dem Objekt und/oder Komponenten des Objekts bereitgestellt. Die Bereitstellung erfolgt durch Übertragen der SIM-Card-Informationen oder Teilen der SIM-Card-Informationen, die benötigt werden, um eine Verbindung aufzubauen. In Abhängigkeit der Ausgestaltung der SIM-Card, kann die Authentifizierung zum Teil oder Vollständig auf dem Schlüssel erfolgen, der die SIM-Card-Informationen enthält oder es kann eine vollständig digitale SIM-Card vom Schlüssel an das Objekt übertragen und/oder Komponenten des Objekts übertragen werden, die dann eine Verbindung zu einem Informationsnetzwerk durch das Objekt und/oder Komponenten des Objekts aufbauen. Bei dieser Informationsverbindung kann es sich um eine Telefonverbindung, um eine Netzwerkverbindung oder ähnliches handeln. Es ist z.B. möglich, hierdurch in einer Wohnung automatisch alle Telefone oder das Internet zu konfigurierten. Hierbei wird vom Haustürschloss, nach dem erfolgreichen Öffnen, die Daten vom Schlüssel z.B. über Kontakte durch das Schloss ausgelesen, um sie dann über ein Netzwerk den einzelnen Komponenten im Haus zur Verfügung zu stellen. Es ist auch denkbar, dass innerhalb eines gewissen Zeitraums nach einem erfolgreichen Öffnen automatisch per Funk die Geräte in der Umgebung initialisiert werden. Bei einem Fahrzeug wird dies in der Regel durch das Einstecken in das Schlüsselloch oder einen anderen Schlüsselaufnahmemechanismus gewährleistet, bzw. bei einer Funkanordnung nach dem Starten des Fahrzeuges. Die Gültigkeit bleibt bestehen solange das Fahrzeug angeschaltet ist.

Wie bereits erwähnt wurde, erlöscht beim Abschließen oder entfernen des Schlüssels die Berechtigung zur Nutzung der SIM-Card-Informationen nach einem zu definierenden Zeitraum. Dies kann einerseits dadurch erreicht werden, dass ein physikalischer Kontakt nicht mehr für die Authentisierung oder Stromversorgung gegeben ist. Bei einer Soft-SIM-Card ist ggfs. die Berechtigung zur Nutzung dieser zu Widerrufen, indem eine entsprechende Nachricht an die Endgeräte gesendet wird, die diese Soft-SIM-Card nutzen. Auch kann die Funkstärke ein Hinweis sein, wenn z.B. ein SIM-Access-Profil verwendet wird. Wenn die Bluetooth-Verbindung unter einen bestimmten Pegel fällt, so wird davon ausgegangen, dass ein Zugriff nicht mehr erfolgen soll. Auch können GPS-Koordinaten GPS (Global Positioning System) verwendet werden, anhand der Schlüssel erkennen kann ob er noch aktiv sein soll oder nicht. Hierbei ist ein GPS-Empfänger (Global Positioning System) im Schlüssel integriert, der dann überprüft, ob eine Nähe zum Haus bzw. der Wohnung gegeben ist, um dann ggfs. die Funktionalität nicht mehr bereitzustellen. Auch ist es denkbar, dass ein Knopf vorgesehen ist, mit dem man jegliche Übertragung von SIM-Card-Informationen unterbinden kann. Sollte dieser gedrückt werden, so ist die SIM-Karte inaktiv.

In der bevorzugten Ausführungsform werden die die SIM-Card-Informationen beim Einschieben in das Schlüsselloch über Kontakte übertragen. Alternativ ist eine Funkübertragung möglich, wobei der Schlüssel hierbei vorzugsweise erkennt, dass ein Schloss erfolgreich geöffnet wurde.

Der Schlüssel kann mit einem Slot versehen sein, in die eine Standard SIM-Karte eingeschoben oder eingelegt wird. Somit könnten Twin-Karten oder Multi-Sims zum Einsatz kommen.

Auch ist es denkbar, dass eine SIM-Karte fest in den Schlüssel integriert ist, vorzugsweise im M2M Factor (industrielle SIM-Karte, die i.d.R. fest mit einer Platine verbinden wird). Hierbei ist die SIM-Karte vorzugsweise programmierbar, um diese den Wünschen des Schlüsselbesitzers anzupassen. Auch ist es denkbar, dass ein Cryptoprozessor vorgesehen ist, der es erlaubt, die SIM-Karte als Soft-SIM und somit als Software in einem Speicher auf dem Schlüssel abzulegen. Neben dem Cryptoprozessor kann auch ein verschlüsselter Speicher gegeben sein, aus dem die Soft-SIM abrufbar ist. Wenn z.B. eine Soft-SIM an Geräte im Objekt übertragen werden soll, so kann dies auf Zertifikaten basieren. Alle Geräte, die mit dem richtigen Zertifikat versehen sind können die Soft-SIM-Informationen abrufen und nutzen. Hierdurch wird sichergestellt, dass die Geräte nicht in unerlaubter Weise Zugang zu der Soft-SIM erhalten. Auch kann es ein Kommando geben, mit dem der Schlüssel die Nutzung widerruft. Ferner ist es denkbar, dass die Soft-SIM regelmäßig den Schlüssel kontaktiert, um dessen Verfügbarkeit im Objekt festzustellen. Hierbei kann z.B. ein sich ändernder Code von der Soft-SIM angefordert werden, der notwendig ist um die Soft-SIM für einen weiteren Betrieb frei zu schalten. Wenn dieser Code von dem Schlüssel nicht bereitgestellt wird, stellt die Soft-SIM ihren Betrieb ein. Andere Konstellationen zur Deaktivierung und zur Aktivierung der SIM-Karten sind denkbar.

Ferner ist es ebenfalls denkbar, dass ein komplettes Modem im Schlüssel integriert ist, das über eine Datenschnittstelle die Daten für eine Kommunikation im Netzwerk erlangt. Hierbei wird die SIM-Karte vom Modem selber angesprochen. Ferner können zusätzlich noch Schnittstellen für eine Antenne vorhanden sein, um die Leistungsfähigkeit (Datentransferrate) des Schlüssels zu erhöhen, indem dieser auf eine externe Antenne Zugriff hat.

Als "Fahrzeugschlüssel" oder "Schlüssel" werden im Folgenden hardware- oder softwaretechnische Objekte oder Geräte bezeichnet, die zur Authentisierung der Nutzung eines Objektes, wie z.B. eines Fahrzeugs eingesetzt werden. Ein solcher Schlüssel erlaubt den räumlichen Zutritt oder logischen Zugang des Benutzers zu diesem Objekt.

Die Erfindung überwindet u.a. folgende Hemmnisse durch die Integration der SIM-Karte (oder ihres hardware- bzw. softwaretechnischen Pendants) und ggf. eines Modems im Fahrzeugschlüssel:
- Nutzung der persönlichen SIM des Nutzers, d.h. das finanzielle Risiko bezügl. der übertragenen Datenmengen liegt beim Nutzer als Vertragsnehmer beim Daten- oder Mobilfunkprovider.
- Unterschiedliche Nutzer eines Fahrzeugs können unterschiedliche Schlüssel und somit unterschiedliche Mobilfunkprovider/Mobilfunkverträge nutzen.
- Überwindung potenzieller Inkompatibilitäten, die bei der Nutzung von externen Geräten, die vom Nutzer ins Fahrzeug eingebracht werden (bspw. Mobilfunktelefone), entstehen können.
- Kosten- und Prozessoptimierungen wenn ein Modem im Fahrzeugschlüssel integriert wird, da sich die Befähigung Fahrzeuge zu einem Internet/Onlinezugang über den Austausch des traditionellen Schlüssels mit einem "Modem-Schlüssel" einfach nachrüsten lässt.
- Ggf. lassen sich durch die Integration von Mobilfunktechnologien in den Schlüssel ebenso sprachgebundene Dienste (Telefonie) realisieren.

Die SIM-Karte wird dabei entweder vom Nutzer selbst in den Schlüssel integriert oder durch einen Dienstleister eingebracht.

Dabei eignen sich insbesondere solche Schlüssel, die nicht nur aus Reide und Bart bestehen und sich nicht nur mechanisch am Fahrzeug authentisieren. Die Kommunikation der SIM (Übermittlung von Zugangs-/Zugriffsdaten) mit dem im Fahrzeug verbauten Modem kann über elektrische/elektronische Kontakte oder kontaktlos (Funk, Infrarot etc.) erfolgen. Im Rahmen der Miniaturisierung von elektronische Komponenten ist eine Integration eines Moderns/Telefoniemoduls und einer SIM-Karte in den Autoschlüssel ebenfalls denkbar. Darunter fällt auch die Nutzung einer Soft-SIM, also eine Softwarevariante der heutigen SIM-Karte.

Durch die Integration der persönlichen SIM-Karte lassen sich personalisierte Abrechnungen für die Nutzung von Internet und Onlinediensten in Objekten/Fahrzeugen realisieren, da der Endkunde/Autofahrer seine (private oder berufliche) SIM-Karte nutzen kann. Die Integration der SIM-Karte in den Autoschlüssel kann entweder über einen SIM-Karten-Slot erfolgen oder er kann fest im Schlüssel verbaut sein.

Für den Automobilhersteller bzw. andere Dienstleister existiert dadurch eine standardisierte Schnittstelle, die erhebliche Prozess- und Produktverbesserungen im Vergleich zum Stand der Technik mit sich bringt.
- Figur 1: zeigt die unterschiedlichen Integrationsmöglichkeiten der Erfindung in einen Schlüssel.

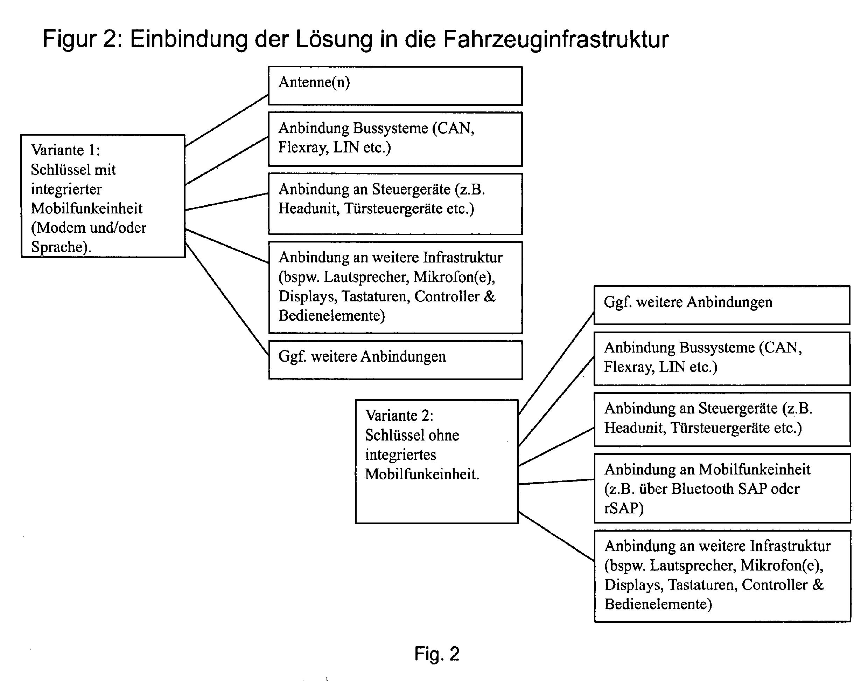

- Figur 2: zeigt die Einbindung der Erfindung in die Fahrzeuginfrastruktur.
- Figur 3: zeigt beispielhaft den Verfahrensablauf für einen Schlüssel mit SIM und ohne Mobilfunkeinheit.
- Figur 4: zeigt beispielhaft den Verfahrensablauf für einen Schlüssel mit SIM und mit Mobilfunkeinheit.

### Beschreibung des Ausführungsbeispiels:

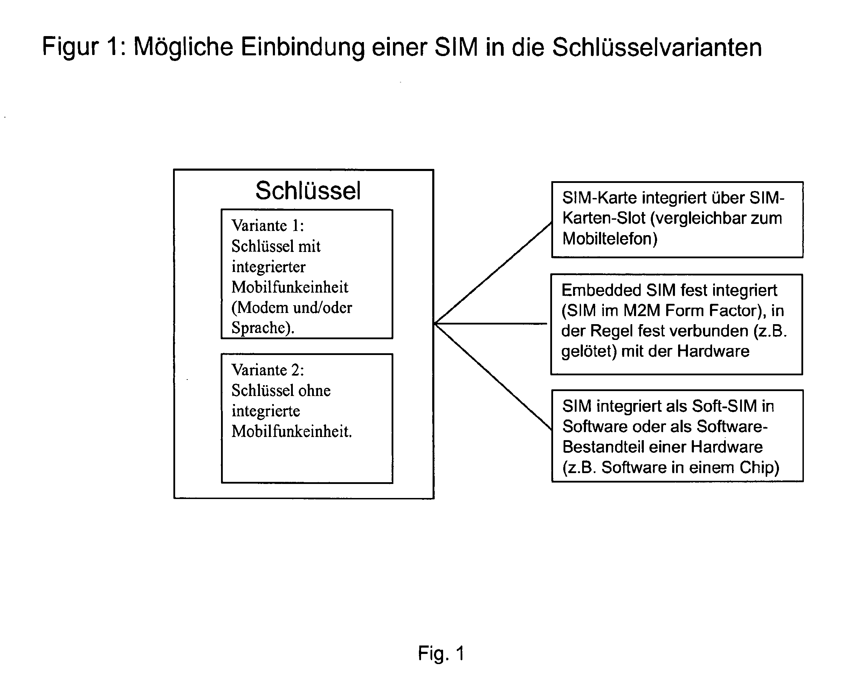

Das Ausführungsbeispiel zeigt in Fig. 1 die mögliche Integration von unterschiedlichen SIM-Karten-Typen in einen Schlüssel. So kann es möglich sein, dass der Schlüssel über einen SIM-Karten-Slot verfügt, in den eine Standard Karte eingeschoben wird. Die SIM-Karte tritt über Kontakte mit dem Schlüssel in Verbindung. Der Schlüssel wiederum nimmt über einen Kontakt oder eine Funkverbindung Verbindung mit dem Objekt auf. Für die Erkennung des Öffnen des Objektes, kann ein Sensor im Schlüssel integriert sein. Auch kann eine Nachricht vom Schloss übermittelt werden, dass das Schloss geöffnet wurde. Um einen Missbrauch sicherzustellen kann diese mit einer Signatur versehen sein, so dass der Schlüssel die Echtheit des Schlosses und dessen Öffnung erkennen kann.

Alternativ kann eine SIM karte im M2M Faktor integriert sein. Genau wie beim Mobiltelefonieren stellt die M2M SIM-Karte sicher, dass die Kommunikation vor unbefugtem Zugriff sicher geschützt und die sendende Einheit eindeutig identifizierbar ist. Um den hohen Beanspruchungen im täglichen Einsatz zu genügen, stehen verschiedene Kartenvarianten zur Auswahl. Je nach Anforderungen ihres Einsatzgebietes können die von M2M SIM-Karten entweder flexibel in die fertigen Geräte nachgerüstet oder schon bei deren Herstellung fest eingebaut werden.

Die Liste oder Anforderungen für M2M SIM-Karten ist vielseitig: So müssen deren Kontaktflächen beim Einsatz im Auto besonders robust sein, um den ständigen Erschütterungen im Fahrbetrieb zu trotzen. In Verkaufsautomaten und Gas- oder Stromzahlern, die oft im Freien stehen oder in Produktionsanlagen integriert sind, stellen beispielsweise große Temperaturschwankungen eine besondere Herausforderung dar. M2M SIM-Karten halten Temperaturen von minus 40 bis zu 105 Grad Celsius ohne Probleme aus. Zusätzlich müssen die Systeme vor Staub geschützt sein.

Alternativ kann eine Soft-SIM eingesetzt werden. Eine Software SIM (oder Soft-SIM) ist die Simulation oder Reproduktion der Funktionalität einer SIM außerhalb der üblichen Hardware einer SIM-Karte.

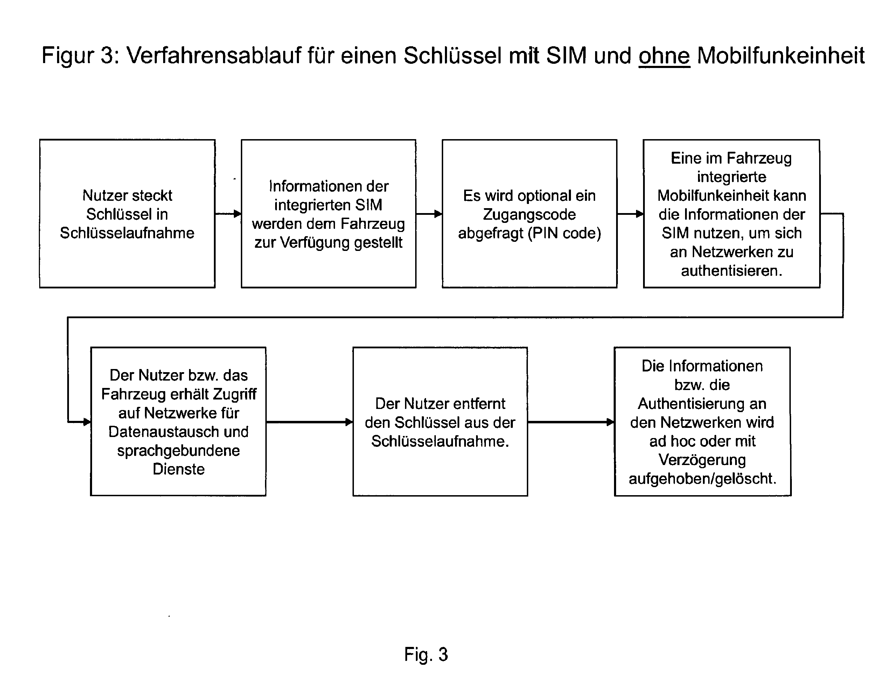

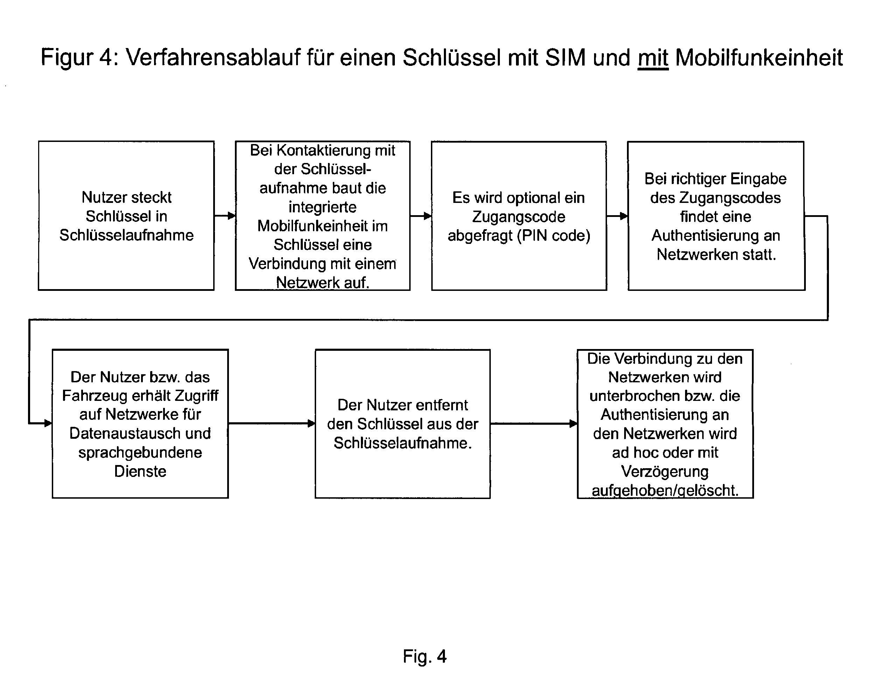

In Fig. 3 und 4 werden die Verfahrensabläufe beschrieben. 1. Im ersten Schritt erfolgt ein öffnen des Objektes durch den Schlüssel. Hierbei werden die von SIM-Card-Informationen an das Objekt und/oder Komponenten des Objekts durch den Schlüssel bereitgestellt. Diese Informationen erlauben, dass das Objekt oder Komponenten des Objektes, eine Authentifizierung zu einem Netzwerk ermöglichen. Danach erfolgt ein Aufbauen einer Verbindung zu dem Informationsnetzwerk durch das Objekt und/oder Komponenten des Objekts mit Hilfe der bereitgestellten SIM-Card-Informationen. Nach Entfernen des Schlüssels werden die Authentisierungsdaten im Objekt gelöscht oder alternativ die Verbindung zum Netzwerk beendet.

## Patentansprüche

1. Verfahren zur Bereitstellung von SIM-Card-Informationen für ein durch einen schlüssel zu öffnendes Objekt, umfassend die Schritte:
- Beim Öffnen des Objektes durch den Schlüssel Bereitstellen von SIM-Card-Informationen an das Objekt und/oder Komponenten des Objekts durch den Schlüssel, die eine Authentifizierung zu einem oder mehreren Netzwerken ermöglichen;
- Aufbauen einer Verbindung zu einem oder mehreren Informationsnetzwerken, die Daten und/oder Sprache übertragen, durch das Objekt und/oder Komponenten des Objekts mit Hilfe der bereitgestellten SIM-Card-Informationen.

2. Das Verfahren nach dem vorhergehenden Anspruch, wobei beim Abschließen oder entfernen des Schlüssels, die Berechtigung zur Nutzung der SIM-Card-Informationen erlöscht.

3. Das Verfahren nach einem oder mehreren der vorhergehenden Ansprüche, wobei der Schlüssel die SIM-Card-Informationen beim Einschieben in das Schlüsselloch über Kontakte und/oder drahtlos überträgt.

4. Das Verfahren nach einem oder mehreren der vorhergehenden Ansprüche, wobei eine SIM-Karte in den Schlüssel in einen SIM-Karten-Slot eingeschoben wird.

5. Das Verfahren nach einem oder mehreren der vorhergehenden Ansprüche, wobei eine SIM-Karte fest in den Schlüssel integriert ist, vorzugsweise im M2M Factor.

6. Das Verfahren nach einem oder mehreren der vorhergehenden Ansprüche, wobei eine SIM-Karte als Soft-SIM als Software in einem Speicher auf dem Schlüssel abgelegt ist.

7. Das Verfahren nach einem oder mehreren der vorhergehenden Ansprüche, wobei das Objekt ein Haus, eine Wohnung, ein Hotelzimmer, ein Schiff, ein Flugzeug, ein Hubschrauber und/oder ein Fahrzeug ist.

8. Das Verfahren nach einem oder mehreren der vorhergehenden Ansprüche, wobei die SIM-Karten-Informationen erst dann bereitgestellt werden, wenn der Schlüssel ein erfolgreiches Öffnen des Objektes vorgenommen hat.

9. Das Verfahren nach einem oder mehreren der vorhergehenden Ansprüche, wobei bei einem berührungslosen Schlüssel, der Zugriff auf die SIM-Karten-Informationen nur möglich ist, wenn sich der Benutzer innerhalb des Objektes aufhält.

10. Schlüssel zum öffnen eines Objektes, wobei in den Schlüssel SIM-Card-Informationen integriert sind,
**gekennzeichnet durch** Mittel, die beim Öffnen des Objektes durch den Schlüssel die SIM-Card-Informationen an das Objekt und/oder Komponenten des Objekts bereitstellen, die eine Authentifizierung zu einem Netzwerk ermöglichen.

11. Schlüssel nach dem vorhergehenden Schlüssel, wobei beim Abschließen oder Entfernen des Schlüssels, die Berechtigung zur Nutzung der SIM-Card-Informationen erlöscht.

12. Schlüssel nach einem oder mehreren der vorhergehenden Schlüsselansprüche, wobei der Schlüssel die SIM-Card-Informationen beim Einschieben in das Schlüsselloch über Kontakte und/oder drahtlos überträgt.

13. Schlüssel nach einem der mehreren der vorhergehenden Schlüsselansprüche, wobei eine SIM-Karte in den Schlüssel in einen SIM-Karten-Slot einschiebar ist.

14. Schlüssel nach einem oder mehreren der vorhergehenden Schlüsselansprüche, wobei eine SIM-Karte fest in den Schlüssel integriert ist, vorzugsweise im M2M Factor.

15. Schlüssel nach einem oder mehreren der vorhergehenden Schlüsselansprüche, wobei eine SIM-Karte als Soft-SIM als Software in einem Speicher auf dem Schlüssel abgelegt ist.

16. Schlüssel nach einem oder mehreren der vorhergehenden Schlüsselansprüche, wobei das Objekt ein Haus, eine Wohnung, ein Hotelzimmer, ein Schiff, ein Flugzeug, ein Hubschrauber und/oder ein Fahrzeug ist

17. Schlüssel nach einem oder mehreren der vorhergehenden Schlüsselansprüche, wobei Mittel vorhanden sind, so dass die SIM-Karten-Informationen erst dann bereitgestellt werden, wenn der Schlüssel ein erfolgreiches Öffnen des Objektes vorgenommen hat.

18. Schlüssel nach einem oder mehreren der vorhergehenden Schlüsselansprüche, wobei Mittel vorhanden sind, dass einen berührungslosen Zugang, der Zugriff auf die SIM-Karten-Informationen nur möglich ist, wenn sich der Benutzer innerhalb des Objektes aufhält.

## Claims

1. A method for providing SIM-card information for an object to be opened by a key, comprising the steps of:
- when opening the object by the key
Providing SIM-card information to the object and / or components of the object by the key enabling authentication for one or more networks;
- Setting up a connection to one or more information networks, which transmit data and / or voice through the object and / or components of the object using the provided SIM-card information.

2. The method according to the preceding claim, wherein when locking or removing the key, the authorization to use the SIM-card information expires.

3. The method according to one or more of the preceding claims, wherein the key transmits the SIM-card information via contacts and / or wirelessly upon insertion into the keyhole.

4. The method according to one or more of the preceding claims, wherein a SIM-card is inserted into the key in a SIM-card slot.

5. The method according to one or more of the preceding claims, wherein a SIM-card is permanently integrated into the key, preferably in the M2M Factor.

6. The method according to one or more of the preceding claims, wherein a SIM-card is stored as soft SIM as software in a memory on the key.

7. The method according to one or more of the preceding claims, wherein the object is a house, an apartment, a hotel room, a ship, an airplane, a helicopter and / or a vehicle.

8. The method according to one or more of the preceding claims, wherein the SIM-card information is only provided when the key has performed a successful opening of the object.

9. The method according to one or more of the preceding claims, wherein with a contact-free key access to the SIM-card information is only possible when the user is inside the object.

10. A key to open an object, wherein SIM-card information is integrated in the key, **characterized by** means providing SIM-card information to the object and / or components of the object by the key during the opening of the object, enabling an authentication to a network.

11. A key to the preceding key, wherein while locking or removing the key, the authorization to use the SIM-card information expires.

12. A key according to one or more of the preceding key claims, wherein the key transmits the SIM-card information via contacts and / or wirelessly upon insertion into the keyhole.

13. A key according to one or more of the preceding key claims, wherein a SIM-card is inserted into the key in a SIM-card slot.

14. A key according to one or more of the preceding key claims, wherein a SIM-card is permanently integrated into the key, preferably in the M2M Factor.

15. A key according to one or more of the preceding key claims, wherein a SIM-card is stored as soft SIM as software in a memory on the key.

16. A key according to one or more of the preceding key claims, wherein the object is a house, an apartment, a hotel room, a ship, an airplane, a helicopter and / or a vehicle

17. A key according to one or more of the preceding key claims, wherein means are provided so that the SIM-card information is only provided when the key has performed a successful opening of the object.

18. A key according to one or more of the preceding key claims, wherein means are provided so that a contact-free entry having access to the SIM-card information is only possible when the user is inside the object.

## Revendications

1. Une méthode pour obtenir une information de carte SIM relative à un objet devant être ouvert au moyen d'une clé, comprenant les étapes :
- lors de l'ouverture de l'objet par la clé
la mise à disposition d'une information de carte SIM à l'objet et/ou à des composants de l'objet par la clé permettant une authentification pour un ou plusieurs réseaux ;
- l'établissement d'une connexion à un ou plusieurs réseaux d'information, transmettant des données et/ou de la voix via l'objet et/ou les composants de l'objet en utilisant l'information de carte SIM fournie.

2. La méthode selon la revendication précédente, dans laquelle l'autorisation d'utilisation l'information de carte SIM expire lors du verrouillage ou de l'enlèvement de la clé.

3. La méthode selon l'une ou plusieurs des revendications précédentes, dans laquelle la clé transmet l'information de carte SIM via des contacts et/ou de manière sans fil dès l'insertion de la clé dans le trou de la serrure.

4. La méthode selon l'une ou plusieurs des revendications précédentes, dans laquelle une carte SIM est insérée dans la clé au sein d'un réceptacle de carte SIM.

5. La méthode selon l'une ou plusieurs des revendications précédentes, dans laquelle une carte SIM est intégrée en permanence au sein de la clé, de préférence suivant un facteur M2M.

6. La méthode selon l'une ou plusieurs des revendications précédentes, dans laquelle une carte SIM est stockée sous forme de code logiciel SIM au sein d'une mémoire sur la clé.

7. La méthode selon l'une ou plusieurs des revendications précédentes, dans laquelle l'objet est une maison, un appartement, une chambre d'hôtel, un navire, un aéronef, un hélicoptère et/ou un véhicule.

8. La méthode selon l'une ou plusieurs des revendications précédentes, dans laquelle l'information de carte SIM n'est mise à disposition que lorsque la clé a permis une ouverture réussie de l'objet.

9. La méthode selon l'une ou plusieurs des revendications précédentes, dans laquelle n'est possible un accès sans contact à l'information de carte SIM que lorsque l'utilisateur est à l'intérieur de l'objet.

10. Une clé pour l'ouverture d'un objet, dans laquelle une information de carte SIM est intégrée au sein de la clé, **caractérisée par** des moyens pour fournir l'information de carte SIM à l'objet et/ou aux composants de l'objet au moyen de la clé durant l'ouverture de l'objet, permettant une authentification à un réseau.

11. Une clé suivant la clé précédente, dans laquelle l'autorisation d'utilisation l'information de carte SIM expire lors du verrouillage ou de l'enlèvement de la clé.

12. Une clé selon l'une ou plusieurs des revendications de clé, dans laquelle la clé transmet l'information de carte SIM via des contacts et/ou sans contact dès l'insertion de la clé dans le trou de la serrure.

13. Une clé selon une ou plusieurs des revendications de clés, dans laquelle une carte SIM est insérée au sein d'un logement de carte SIM de la clé.

14. Une clé selon une ou plusieurs des revendications de clé, dans laquelle une carte SIM est intégrée de manière permanente au sein de la clé, de préférence suivant un facteur M2M.

15. Une clé selon une ou plusieurs des revendications de clé, dans laquelle une carte SIM est stockée sous forme de code logiciel SIM au sein d'une mémoire sur la clé.

16. Une clé selon une ou plusieurs des revendications de clé, dans laquelle l'objet est une maison, un appartement, une chambre d'hôtel, un navire, un aéronef, un hélicoptère et/ou un véhicule.

17. Une clé selon une ou plusieurs des revendications de clé, dans laquelle sont prévus des moyens de telle manière que l'information de carte SIM n'est mise à disposition que lorsque la clé a permis une ouverture réussie de l'objet.

18. Une clé selon une ou plusieurs des revendications de clé, dans laquelle sont prévus des moyens permettant la possibilité d'un accès sans contact à l'information de carte SIM que lorsque l'utilisateur est à l'intérieur de l'objet.
